# EUROPEAN PATENT APPLICATION

(11) **EP 1 321 873 A2**
(43) Date of publication of application: **25.06.2003**
(21) Application number: 02027392.6
(22) Date of filing: 09.12.2002
(51) Int. Cl.: G06F 17/60

(54) **Planning and maintenance board display system for an equipment rental business**

(30) Priority: 21.12.2001 US 341842 P; 30.04.2002 US 134610
(71) Applicant: Caterpillar Inc., Peoria Illinois 61629-6490 (US)
(72) Inventor: Feser, John M., Peoria, Illinois 61629-6490 (US); Janda, Steven R., Peoria, Illinois 61629-6490 (US); Shepard, James R., Peoria, Illinois 61629-6490 (US); Travaillot, Paul, Peoria, Illinois 61629-6490 (US)
(74) Representative: Wagner, Karl H., Dipl.-Ing.

(57) **Abstract**

A system is provided for planning work in an equipment rental business. The system includes a planning board display 112 for displaying one or more entries related to one or more pieces of equipment 140 to be rented or returned, wherein at least one entry includes an indication of status prioritizing work in the equipment rental business.

## Description

### Technical Field

The present invention relates generally to rental equipment businesses and, more particularly, to a system and method for improving and monitoring customer service in a rental equipment business.

### Background

Customer service is an important aspect of the rental equipment business. Specifically, a customer will want to be assured that the equipment they are renting will be ready for them to pick up or delivered to them at their requested time. Further, the customer will want to be assured that the rented equipment will be able to adequately perform its designated task reliably. It may also be important that the personnel in the rental equipment business be knowledgeable, both about the equipment itself and about a particular customer's rental. With any business, prompt service and competitive pricing are also key features.

Fulfillment of all of these features of customer service in the rental equipment business may be difficult. For example, rental equipment businesses may rent numerous pieces of large equipment, such as bulldozers or other machinery, as well as small equipment, such as jackhammers or air compressors. There may be many models and configurations of each piece of equipment. Further, there may be accessories that are rented or sold with various pieces of equipments, such as cords, hoses, or generators. Keeping track of this extensive and varied inventory may prove difficult, especially when paired with the task of maximizing availability by monitoring requests for and returns of the rental equipment to ensure that rental equipment is ready when requested. In addition to the variety in inventory, rental equipment may also require maintenance to improve reliability. Tracking of the rental equipment through the maintenance process, as well as monitoring required maintenance, may be cumbersome tasks.

Currently available rental business systems may use a manual planning board, implemented, for example, using a white-board and dry erase markers. This type of planning board, however, is inefficient. The information is only available to personnel in the same room as the board. Duplication of data entry may occur, as entering rental requests and information into a computer may be separate from entering the information onto the manual planning board. This lack of reliable communication of data to personnel may lead to decreased customer service. Limited information may be available from the manual planning board, requiring an employee to seek information from multiple locations. Further, inaccuracies and inefficiencies may arise from the necessity to enter data multiple times.

The present invention is directed to overcoming one or more of the problems or disadvantages associated with the prior art.

### Summary of the Invention

A system is provided for planning work in an equipment rental business. The system includes a planning board display for displaying one or more entries related to one or more pieces of equipment to be rented or returned, wherein at least one entry includes an indication of a status for prioritizing work in the equipment rental business.

A method is provided for planning work in an equipment rental business. A rental request for a piece of equipment is received. The status of the piece of equipment is determined. An indication of the status of the piece of equipment are displayed, wherein the status indicates a priority for work in the equipment rental business.

It is to be understood that both the foregoing general description and the following detailed description are exemplary and explanatory only and are not restrictive of the invention as claimed.

### Brief Description of the Drawings

The accompanying drawings, which are incorporated in and constitute a part of this specification, illustrate exemplary embodiments of the invention and together with the description, serve to explain the principles of the invention. In the drawings:
Fig. 1 is a block diagram of a rental equipment business system, consistent with an exemplary embodiment of the present invention;
Fig. 2 illustrates a planning board display, consistent with an exemplary embodiment of the present invention; and
Fig. 3 illustrates a handheld computer display, consistent with an exemplary embodiment of the present invention.

### Detailed Description

Reference will now be made in detail to embodiments of the invention, examples of which are illustrated in the accompanying drawings. Wherever possible, the same reference numbers will be used throughout the drawings to refer to the same or like parts.

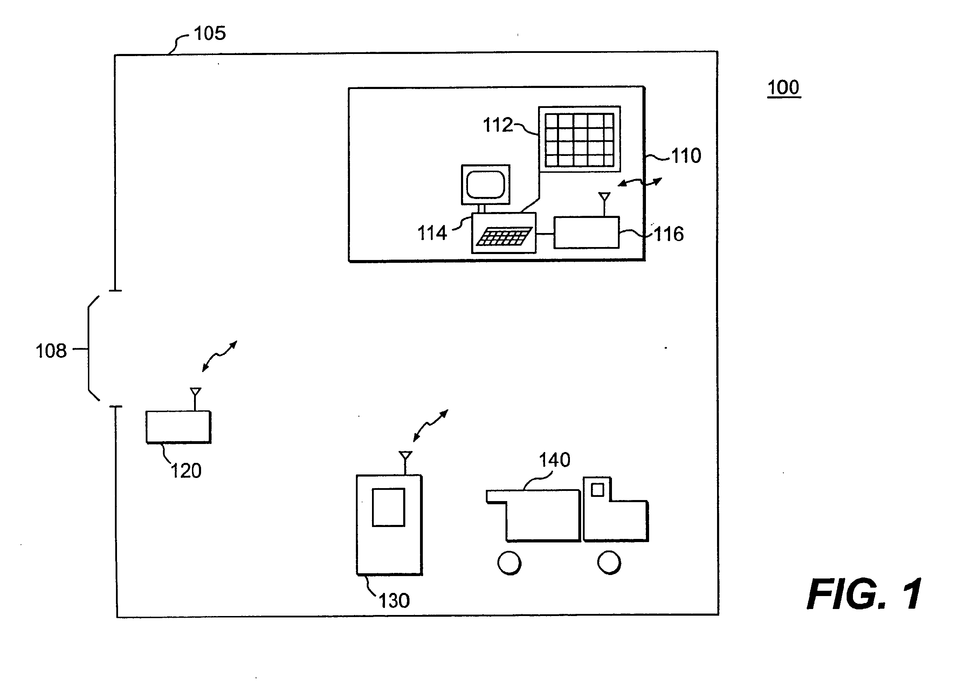

Fig. 1 illustrates a rental equipment business system 100, consistent with an exemplary embodiment of the present invention. Rental equipment business system 100 may include a rental business location 105. Rental business location 105 may include a gate 108, providing entry to rental business location 105. Rental business location 105 may also include a rental store 110, a sensor 120, a handheld device 130, and equipment 140.

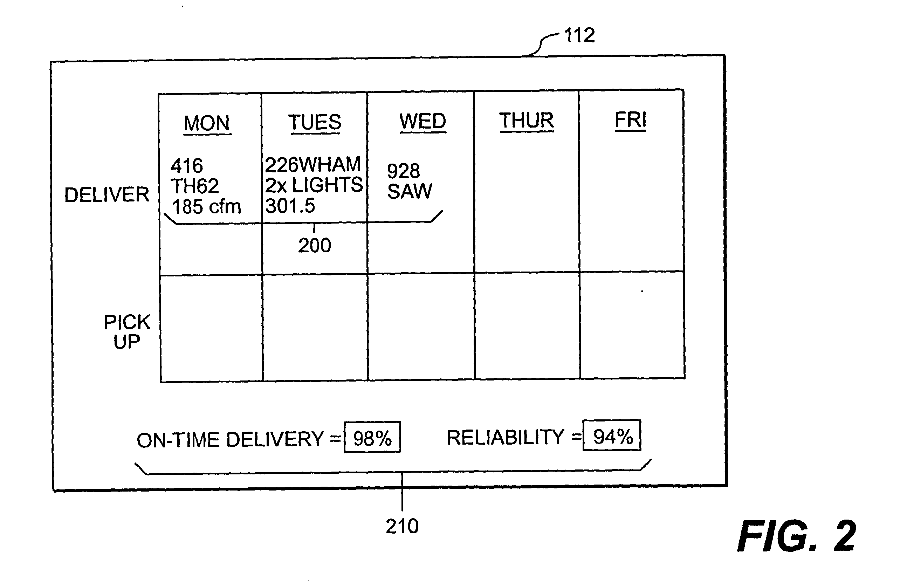

Rental store 110 may include a planning board display 112, a computer 114, and a communication device 116. Planning board display 112, described in greater detail with respect to Fig. 2, may provide a graphical representation of one or more of the key aspects of customer service and may be implemented via a monitor, LCD panel, or other display device capable of providing graphical information. For example, planning board display 112 may provide information about requests for rental equipment, such as equipment and time and/or day needed, information about the status of the equipment for each request, and/or information about customer service parameters, such as the percentage of on-time delivery, reliability measurements, average recycle time (measuring the time between when a piece of equipment is returned until the equipment is ready for rental to the next customer), and/or the average transaction time for the check-in or check-out process.

Planning board display 112 may be connected to computer 114. Computer 114 may be used to store rental request and customer service information. The stored information may then be provided to planning board display 112. Further, computer 114 may be used to input new rental request or alter existing rental request information or to input information pertaining to rental transactions. Computer 114 may also be used to calculate customer service parameters based on information gathered from rental requests and transactions, such as the percentage of on-time deliveries. Computer 114 may be implemented in various environments to provide tools for obtaining rental and customer service information and for providing the information to planning board display 112. Computer 114 may include hardware specifically constructed for performing various processes and operations of the invention or may include a general purpose computer or computing platform selectively activated or reconfigured by program code to provide the necessary functionality.

Computer 114 may also be connected to communication device 116. Communication device 116 may include a wireless communication receiver, such as a wireless local area network (LAN) device or wireless modem. Alternatively, communication device 116 may include a satellite communication receiver, a hard-wire communication receiver, or other communication system capable of receiving signals. Communication device 116 may also be connected to the Internet, local area network (LAN), or other network. Communication device 116 may receive information, such as the status of rental equipment, from sensor 120, a handheld device 130, a digital camera (not shown) and/or equipment 140. Communication device 116 may provide this information to computer 114 for processing and display on planning board display 112.

Sensor 120 may include any type of sensor for gathering information, such as, for example, a radio frequency identification tag (RFID), bar code reader, or wireless communication device associated with the equipment 140. Information gathered by sensor 120 may be sent by, for example, wireless technology, satellite communications, cellular communications, and/or radio frequency communications, to communication device 116. Although only one sensor 120 is shown in Fig. 1, it should be understood that rental business location 105 may include any number of sensors 120. For example, one sensor 120 may be located near gate 108, to sense equipment leaving or entering rental business location 105. Other sensors (not shown) may be located at maintenance stations or other locations throughout rental business location 105. For example, rental business location 105 may include, for example, a garage for equipment repair and a wash area for equipment cleaning. Sensors located at the garage and/or wash area may provide information about the location of a piece of equipment at one of these stations. Alternatively, sensors may be mobile and carried by personnel of the rental business, such as via handheld device 130 described below.

Handheld device 130 may be used by personnel working in the rental business location 105. Handheld device 130 may be a handheld computer, implemented using, for example, PALM or PocketPC technology and wireless capabilities. Personnel may use handheld device to input information using, for example, a keypad or touch-screen. This information is then sent to communication device 116. Handheld device 130 may further include a sensor, such as an RFID reader or bar code reader. Personnel may use the sensor on the handheld device to gather information, which may then be transmitted to communication device 116. Alternatively, handheld device 130 may include a digital camera which may be used to gather information, which may then be transmitted to communication device 116. Personnel may also be able to access information from computer 114 via handheld device 130. Although only one handheld device 130 is shown in Fig. 1, it should be understood that any number of handheld devices may be included in rental business location 105. For example, handheld devices may be carried by various personnel, such as clerks, maintenance workers, or other persons who may have or may gather information used by planning board display 112.

Equipment 140 is defined broadly to include any equipment, product, or item that may be rented. For example, equipment 140 may include large equipment, such as bulldozers or other machinery, and/or small equipment, such as jackhammers or air compressors. Equipment 140 may also include accessories to be used with the large or small equipment. Further, equipment 140 may include furniture, office equipment, home improvement tools, appliances, vehicles, or other items needed for short- and/or long-term use. Equipment 140 may be stored at one or more locations in rental business location 105. Equipment 140 may also include RFID tags, bar codes, or other information tags. For example, equipment 140 may include an RFID tag, which when scanned by sensor 120, provides information relating to the identification of equipment 140 and/or information relating to the status and/or location of equipment 140. Information relating to the identification of the equipment may include, for example, the type of equipment, a serial number associated with the equipment, and/or information about the configuration of the equipment. Information relating to the status of the equipment may include the number of miles or hours that the equipment has been in operation and/or the equipment's maintenance records. Information relating to the location of the equipment may include the physical location of the equipment in the rental business location 105, the estimated arrival time of the equipment at a rental business location (if being returned), or the stall or bay in a storage location where the equipment is being stored. This information may be transmitted directly to communication device 116, or may be sensed using sensor 120 or handheld device 130, and subsequently sent to communication device 116.

An exemplary rental transaction using the rental equipment business system 100 is described as follows. A customer may enter rental store 110, or alternatively, may telephone a clerk at rental store 110, to request one or more pieces of equipment 140 for rental at a certain day and time. The clerk may enter details of the request into computer 114 and the request would then be reflected on planning board display 112. Alternatively, a customer may make an electronic request, for example, via a web site. The electronic request may then be processed by computer 114 and reflected on planning board display 112. For processing requests, among other things, computer 114 may include routing and dispatch software. For example, planning board display 112 may list the equipment requested by the customer, as well as the date and/or time the equipment is needed. If any status information about the equipment is available in computer 114, that information may also be represented on planning board display 112. For example, the equipment may be currently rented to a second customer and is due back before the first customer expects to pick up the equipment. Planning board display 112 may indicate the equipment's status via additional text (e.g., "rented until Tuesday"), color-coded text (e.g., red text means the equipment is off-site or rented), icon (e.g., a stop sign indicated that the equipment is not currently available), or some other visual means, such as flashing text, indicating the current status of the equipment.

In one embodiment, multiple pieces of equipment may be available for rental in a rental fleet. In this embodiment, planning board display 112 may indicate the status of all pieces of equipment (regardless of whether they have been requested). For example, planning board display 112 may indicate which pieces of equipment of the fleet are ready for rental and/or which pieces of equipment of the fleet are rented. Alternatively, planning board display 112 may indicate the status of all pieces of equipment that are available for rental, all pieces of equipment that are not currently rented, and/or a prioritized list of equipment not rented, wherein the prioritization may be based on a projected availability for each piece of equipment.

The indication of status on planning board display 112 may also be used to prioritize work in the equipment rental business. For example, planning board entries that are in a certain color text, indicating a certain category or status, may indicate to the employees of the equipment rental business that tasks relating to that equipment should be given top priority. If, for example, yellow text indicated that the equipment was due to be rented today, but that the equipment was not yet ready, employees would know that tasks related to that equipment should be done before equipment listed in another color, indicating less urgency.

When the second customer returns the equipment, sensor 120 may sense that the equipment has entered rental business location 105, for example, via an RFID tag on the equipment, and send that information to communication device 116, which provides the information to computer 114. Computer 114 will use this information to update planning board display 112, both as to the second customer's rental status (e.g., returned) and as to the first customer's rental status (e.g., equipment on-site, not ready to be rented). In another embodiment, the equipment may be checked in by a clerk using handheld device 130. In yet another embodiment, the equipment may be picked up from the second customer by a delivery personnel. The delivery personnel may use handheld device 130 to update the status of the equipment when picking it up from the second customer's location.

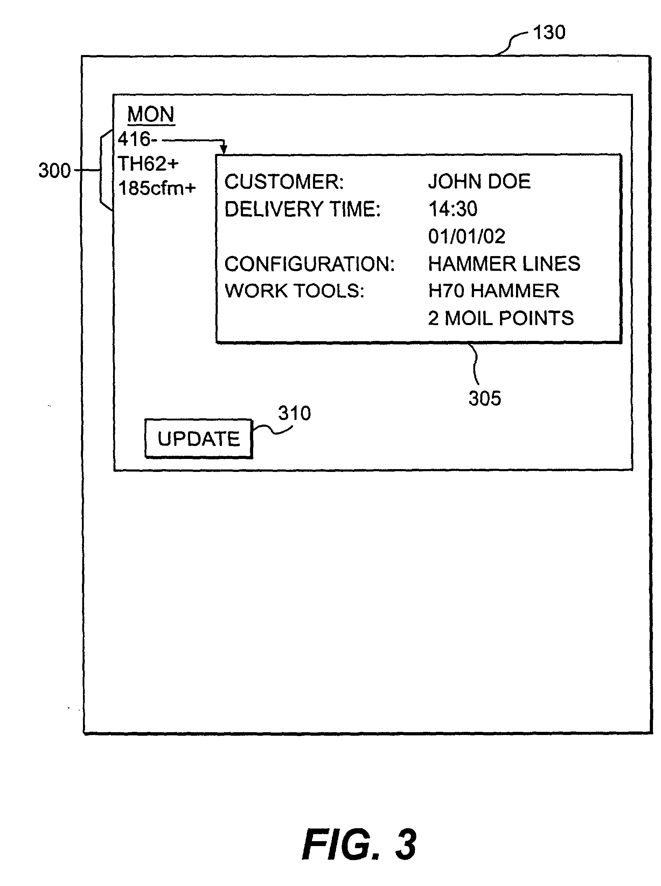

Rental business personnel may then prepare the returned equipment for the next rental. In one exemplary embodiment, computer 114 and/or handheld device 130 may determine information about the equipment, such as, for example, if any maintenance is required before the next rental, as well as information about the next customer. For example, computer 114 may compare a current hour-meter reading from the piece of equipment with stored information indicating the hour-meter reading of the last oil change. If the equipment has been used a predetermined number of additional hours since the last oil change, computer 114 may determine that an oil change is needed. Handheld device 130 may similarly determine information, or alternatively, may receive this information from computer 114. Fig. 3 describes handheld device 130 in greater detail. Handheld device 130, for example, may further indicate that the vehicle needs to be washed before the next rental. Handheld device 130 may also indicate that the vehicle is needed for rental tomorrow and that an accessory item is also to be rented or with the equipment to the first customer. If multiple actions are due, for example an oil change as well as a wash, handheld device 130 may display a prioritized list of action items. The list may be prioritized by handheld device 130 or computer 114.

Handheld device 130 may also be used to obtain additional information from computer 114. In one embodiment, when a list of action items is forwarded from computer 114 to handheld device 130, additional information from the rental request or contract is also forwarded. This information may include, for example, customer identification, delivery time, configuration of the equipment, associated accessories, status of the equipment, location of the equipment, and/or required maintenance of the equipment. The worker may then access this information as needed. In another embodiment, the worker may use handheld device 130 to request further information from computer 114.

The maintenance worker may then move the equipment to a wash area. At the wash area, there may be a sensor 120 to update computer 114 with the equipment's location. In this case, when the equipment leaves the wash area, the sensor 120 may sense the exit and further indicate to computer 114 that the washing of the equipment is complete. Alternatively, the maintenance worker may update the status of the equipment via handheld device 130. Similarly, after the vehicle has been washed, and any other maintenance performed, any indicated accessory may be paired with the equipment. This information is also updated in computer 114 via handheld device 130 or sensor 120. After any update of computer 114, planning board display may be updated to reflect the new status, for example, by changing the additional text, color-coded text, icon, or other indicator. When it has been indicated that the equipment is ready for rental, that information is also updated and displayed.

When the first customer comes to pickup the equipment, information about the pickup may be entered into computer 114 by a clerk in rental store 110. Information entered may include the time that the customer picks up the equipment. Alternatively, sensor 120 may sense when the equipment leaves gate 108 and send the exit information to communication device 116 to be forwarded to computer 114. The return of the equipment by the first customer would be similar to that described above with respect to the second customer.

Computer 114 may also calculate customer service parameters based on information received during rental transactions. Customer service parameters may be calculated automatically as information is received or at predetermined times. As used in throughout this description, automatically means without an operator performing the task. Tasks performed automatically, however, may require some interaction with an operator. For example, an input from an operator may be needed in order for the task to begin. Alternatively, or in addition to, the operator may be prompted to continue, respond to questions, or in some other manner interact with the system. Further, automatically does not necessarily mean occurring immediately. For example, there may be some delay, lapse in time, or other issue that may make it such that all tasks do not occur immediately.. In one embodiment, customer service parameters may consider the time each rental is expected to be picked up, entered when the equipment rental request is taken, and when the status of the vehicle as "ready to be rented" is updated as well, thus making it possible to determine what percentage of equipment pieces are ready prior to the time they are to be picked. Further, computer 114 may determine reliability by determining the number of disabled machines, for example, by counting the number of work orders required in the field or machine swaps requested. The reliability may then be calculated as the percentage of rentals not subject to work orders or swaps. Other customer service parameters, such as average recycle time or average transaction time may also be calculated. Customer service parameters may be displayed on planning board display 112 or handheld device 130 to encourage quality customer service by employees.

Fig. 2 illustrates an exemplary planning board display 112, showing a number of rental requests. For example, daily entries 200 may indicate pieces of equipment that are due to be rented on each particular day of the week. As discussed above, the status of each piece of equipment may be indicated via additional text, color-coded text, icon, or other indication. Further, planning board display 112 may provide information about customer service parameters 210, such as on-time delivery and reliability.

Fig. 3 illustrates an exemplary handheld device 130. Handheld device 130 may display similar information to that displayed on planning board display 112, such as daily entry for the current day 300. The daily entry 300 may list the pieces of equipment due to be rented on the current day. Using handheld device 130, it may be possible to get further information about each rental request, for example, by requesting information from the rental contract or request from computer 114. For example, rental request 305 provides further detail about one of the rental requests in daily entry 300. Rental request 305, for example, may provide the customer's name, the delivery time or time the equipment has been promised, any maintenance required before rental, configuration of the equipment, and/or extra accessories or tools to be included, as well as other information, such as the current status or location of the equipment. Handheld device 130 may also include the ability to update information, such as by accessing an update button 310. As described above, handheld device 130 may also include a sensing device, such as an RFID or bar code reader.

### Industrial Applicability

Systems and methods are thus provided for improving and monitoring customer service in a rental business. Specifically, key aspects of customer service may be enhanced. The ability to provide for on-time delivery of equipment is enhanced through automated tracking of the equipment, as well as automated monitoring of equipment maintenance. Further, availability is enhanced because the planning board display and handheld devices provide a "to-do" list that helps employees to focus their attention on more urgent tasks easily, for example, via color-coded or otherwise indicated equipment status. Prioritization may lead to not only availability but also prompt customer service. Faster customer service and more knowledgeable personnel result from the efficient communication of information made possible by the system. Further, price competitiveness is increased by this enhanced communication of knowledge because the employees can be more efficient. The use of the planning board display and handheld devices as a "to-do" list also promote efficiency, leading to greater cost-effectiveness.

In addition to enhancing customer service, systems and methods consistent with the present invention also provide for tracking of customer service parameters, based on the information gathered by the system. This provides not only accurate measurements, but also a means for encouraging employees by providing immediate and continuous feedback of progress towards customer service objectives.

It will be readily apparent to those skilled in this art that various changes and modifications of an obvious nature may be made, and all such changes and modifications are considered to fall within the scope of the appended claims. Other embodiments of the invention will be apparent to those skilled in the art from consideration of the specification and practice of the invention disclosed herein. It is intended that the specification and examples be considered as exemplary only, with a true scope and spirit of the invention being indicated by the following claims and their equivalents.

## Claims

1. A system for planning work in an equipment rental business, the system comprising:
a planning board display (112) for displaying one or more entries related to one or more pieces of equipment (140) to be rented or returned, wherein at least one entry includes an indication of a status prioritizing work in the equipment rental business; and
a computer (114) configured to control the planning board display (112).

2. The system of claim 1, further including:
a handheld device (130) having wireless capability; and
a communication device (116), operably connected to the computer, for sending communications to and receiving communications from the handheld device (130).

3. The system of claim 2, wherein the handheld device (130) is configured to perform at least one of the following: receive rental information associated with the one or more entries of the planning board display and send information about the status of a piece of equipment.

4. The system of claim 1, further including:
a sensor (120) having wireless capability; and
a communication device (116), operably connected to the computer, for receiving information from the sensor (120).

5. The system of claim 1, wherein the planning board display (112) also includes customer service parameters, wherein the customer service parameters include one or more of the following: on-time delivery percentage, reliability percentage, average recycle time, and average in-store transaction times.

6. The system of claim 1, wherein the status is based on one or more of the following factors: scheduled pick-up time of a piece of equipment, time of delivery for the piece of equipment, estimated time of returning equipment, and time the equipment must be ready to meet the time of delivery.

7. A method for planning work in an equipment rental business, the method comprising:
receiving a rental request for a piece of equipment;
determining a status of the piece of equipment; and
displaying an indication of the status, wherein the status indicates a priority for work in the equipment rental business.

8. The method of claim 7, wherein the status is determined automatically.

9. A method of improving customer service in an equipment rental business, the method comprising:
receiving one or more rental requests for one or more pieces of equipment;
determining the status of at least one of the pieces of equipment;
displaying an indication of the status, wherein the status indicates a priority for work in the equipment rental business; and
determining one or more actions based on the rental requests and the status of each piece of equipment.

10. The method of claim 9, further including:
determining goals for a set of customer service parameters; and
displaying information about the customer service parameters based on the determined goals.
